# EUROPÄISCHE PATENTSCHRIFT

(11) **EP 1 737 689 B1**
(45) Veröffentlichungstag und Bekanntmachung des Hinweises auf die Patenterteilung: **25.06.2008**
(21) Anmeldenummer: 05735012.6
(22) Anmeldetag: 17.03.2005
(51) Int. Cl.: B60J 7/12

(54) **FALTVERDECK FÜR EIN CABRIOLET-FAHRZEUG SOWIE CABRIOLET-FAHRZEUG MIT EINEM FALTVERDECK**
FOLDING TOP FOR A CONVERTIBLE, AND CONVERTIBLE COMPRISING A FOLDING TOP
CAPOTE POUR UN VEHICULE CABRIOLET, AINSI QUE VEHICULE CABRIOLET EQUIPE D'UNE CAPOTE

(30) Priorität: 31.03.2004 DE 102004015666
(43) Veröffentlichungstag der Anmeldung: 03.01.2007
(73) Patentinhaber: Wilhelm Karmann GmbH, 49084 Osnabrück (DE)
(72) Erfinder: HESELHAUS, Udo, 49479 Ibbenbüren (DE)
(86) Internationale Anmeldenummer: PCT/DE2005/000485
(87) Internationale Veröffentlichungsnummer: WO 2005/095137

(56) Entgegenhaltungen:
- EP-A- 1 024 042
- EP-A- 1 092 579
- EP-A- 1 398 189
- DE-U1- 29 513 595
- US-A- 4 693 509

## Beschreibung

Die Erfindung betrifft ein Faltverdeck für ein Cabriolet-Fahrzeug sowie ein Cabriolet-Fahrzeug mit einem solchen Faltverdeck.

Aus der EP 1092579 B1 ist ein versenkbares Kraftfahrzeugverdeck mit einem im wesentlichen hinter dem Fahrgastraum angeordneten, in sich starren Dachabschnitt bekannt, der eine Heckscheibe enthält. Beim Öffnen des Verdecks wird der in sich starre hintere Dachabschnitt, der mittels eines Hebelgestänges an der Fahrzeugkarosserie gelagert ist, nach hinten und abwärts verschwenkt, so dass er in geöffneter Stellung des Verdecks in einem Verdeckaufnahmeraum im Heckbereich des Fahrzeugs gebildeten aufgenommen ist und über ihn der restliche Teil des Daches zusammengelegt angeordnet ist, wobei ein vorderer starrer Dachabschnitt unter zusammenfalten eines mittleren, den vorderen starren Dachabschnitt und den hinteren starren Dachabschnitt verbindenden Dachabschnitts aus textilem Material zusammengeschoben werden.

Aus der DE 100 29472 A1, von der im Oberbegriff des beigefügten Anspruchs 1 ausgegangen wird, ist ein Cabriolet-Fahrzeug mit einem eine flexible Dachhaut mit formstabiler Heckscheibe aufweisenden Faltverdeck bekannt, dessen Verdeckgestell einen heckseitigen Spannbügel aufweist, auf dem sich die Heckscheibe unmittelbar abstützt und der mit einem die Heckscheibe mit der flexiblen Dachhaut verbindenden Rahmen eine Baueinheit bildet. Beim Öffnen des Verdecks wird die Baueinheit insgesamt abwärts in einen Verdeckkasten geschwenkt. Zur weitgehenden Absenkung der Baugruppe in den Verdeckkasten stehen von dem Spannbügel in dessen geschlossener Stellung nach unten Konsolen vor, die über Hebel an der Karosserie gelagert sind. Damit die Baueinheit beim Öffnen des Verdecks verschwenkt wird, ist sie über im oberen Bereich der Seitenränder der Heckscheibe angreifende Hebel mit dem Verdeckgestell verbunden.

Ein weiteres ähnliches Faltverdeck ist von EP 1 398 189 bekannt. Ein Problem, das sich bei dem bekannten Verdeck stellt, liegt darin, dass die vorzugsweise aus Stoff bestehende Dachhaut zwar vom Spannbügel gespannt wird, dass die Spannung des Verdeckstoffs zwischen seitlichen Rahmenteilen und dem Heckscheibenrand jedoch unzureichend ist, wodurch es zu Faltenbildungen, Wellungen oder auch, bei hoher Geschwindigkeit, zu einem Flattern kommen kann.

Der Erfindung liegt die Aufgabe zugrunde, ein gattungsgemäßes Faltverdeck derart weiterzubilden, dass bei einfachem Aufbau in geschlossenem Zustand des Faltverdecks eine einwandfreie Spannung auch in den Bereichen neben der Heckscheibe gewährleistet ist. Der Erfindung liegt weiter die Aufgabe zugrunde, ein Cabriolet-Fahrzeug mit einem solchen Faltverdeck zu schaffen.

Der das Faltverdeck betreffende Teil der Erfindungsaufgabe wird mit den Merkmalen des Anspruchs 1 gelöst.

Bei dem erfindungsgemäßen Faltverdeck werden die neben der Heckscheibe befindlichen Bereiche der flexiblen Dachhaut somit gezielt zwischen dem seitlichen Scheibenrand und den das Faltverdeck seitlich abschließenden Seitenrahmenteilen gespannt, so dass ein einwandfreies Aussehen des Verdecks gewährleistet ist.

Die Unteransprüche 2 bis 8 sind auf vorteilhafte konstruktive Merkmale des erfindungsgemäßen Faltverdecks gerichtet.

Gegenstand des Anspruchs 9 ist ein mit dem erfindungsgemäßen Faltverdeck ausgerüstetes Cabriolet-Fahrzeug.

Die Erfindung wird im folgenden anhand schematischer Zeichnungen beispielsweise und mit weiteren Einzelheiten erläutert.

In den Figuren stellen dar:
- Fig. 1 bis 4: schematische Seitenansichten des erfindungsgemäßen Faltverdecks in vier verschiedenen Stellungen mit nur angedeuteter Darstellung von Betätigungshebeln,
- Fig. 5 bis 7: einem Ausschnitt A des Verdecks gemäß Fig. 1 in drei verschiedenen Stellungen mit Hervorhebung von Gelenkhebeln und einem Betätigungshebel und
- Fig. 8 bis 10: den Ausschnitt A des Verdecks gemäß Fig. 1 in drei verschiedenen Stellüngen mit Hervorhebung von Steuerhebeln

In der vorliegenden Anmeldung beziehen sich die Ausdrücke vorne und hinten jeweils auf die Fahrtrichtung eines Fahrzeugs. Rechts und links bedeutet jeweils die in Vorwärtsrichtung des Fahrzeugs rechte bzw. linke Seite.

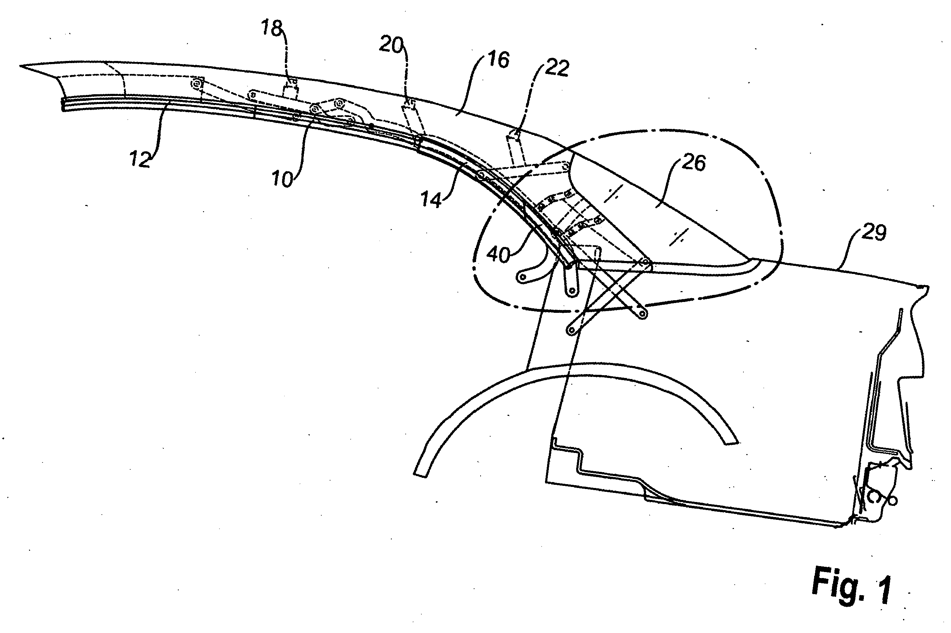

Fig. 1 ist eine schematische Ansicht auf einen Teil eines Cabriolet-Fahrzeugs, wobei das gesamte Verdeck mit einem Heckbereich des Fahrzeugs sichtbar ist. Der Verdeckmechanismus ist in spiegelbildlicher Anordnung zur Längsmittelebene des Fahrzeugs rechtsseitig und linksseitig am Fahrzeug vorgesehen. Dargestellt ist nur der linksseitige Verdeckmechanismus.

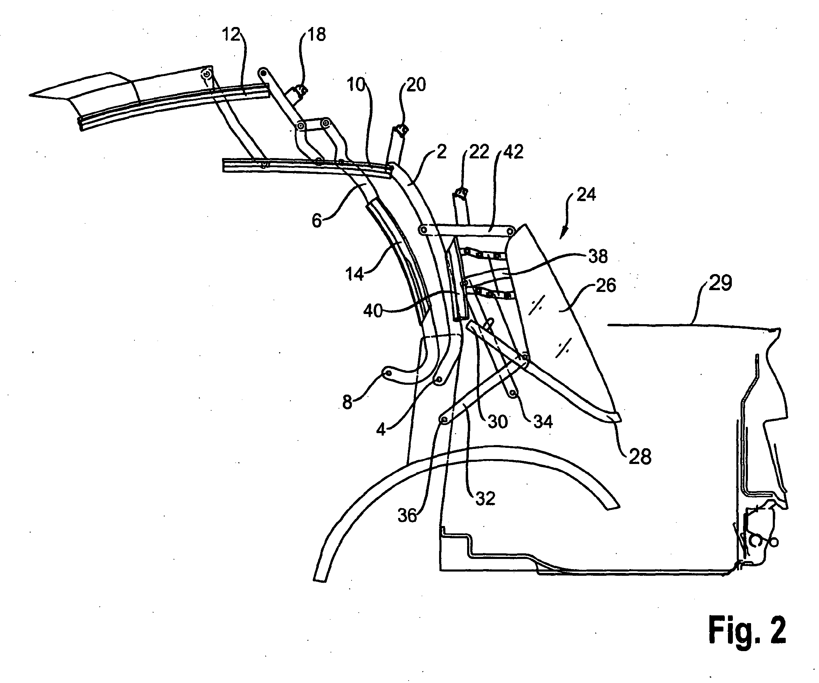

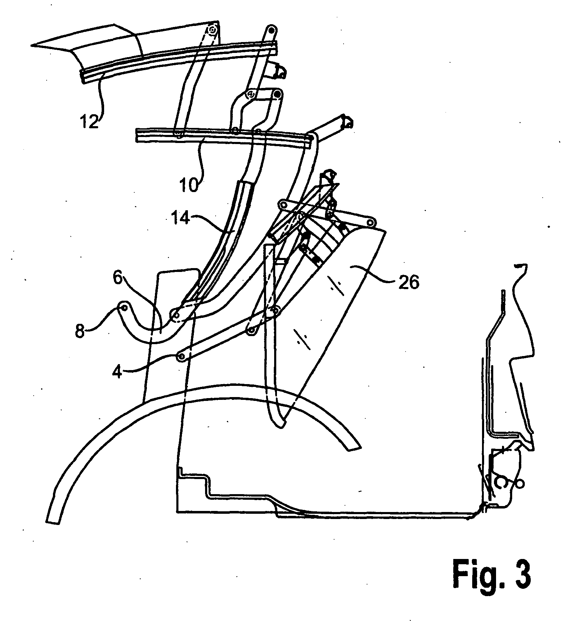

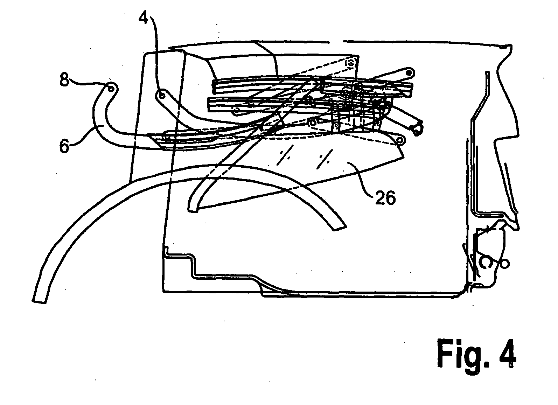

Die Fig. 1 bis 4 zeigen das Verdeck in unterschiedlichen Stellungen, wobei die Fig. 1 das geschlossene Verdeck und die Fig. 4 das vollständig geöffnete Verdeck zeigen und die Fig. 2 und 3 Zwischenstellungen darstellen.

Bezüglich der nachfolgenden Beschreibung der einzelnen Teile wird insbesondere auf die Fig. 2 und 3 hingewiesen, in denen die Einzelteile besonders gut sichtbar sind.

Das Verdeckgestell enthält einen ersten Rahmenhebel 2, der in einem Lager 4 karosseriefest gelagert ist, und einen zweiten Rahmenhebel 6, der bei 8 karosseriefest gelagert ist. An dem Rahmenhebel 2 ist ein Seitenrahmenteil 10 gelagert, das mit dem zweiten Rahmenhebel 6 gelenkig verbunden ist und über weitere Hebel gelenkig mit einem Seitenrahmenteil 12 verbunden ist. Insgesamt bilden die genannten Bauteile in an sich bekannter Weise ein Scherengestell, das in voll ausgefahrenem Zustand (Fig. 1) eine Position derart annimmt, dass die Rahmenteile 12, 10 und ein ein weiteres Rahmenteil 14, das durch einen Teilbereich des zweiten Rahmenhebels 6 gebildet ist, in gegenseitiger Anlage unmittelbar hintereinander angeordnet sind (Fig. 1) und einen Seitenrand des Daches bilden, das in Form einer flexiblen Dachhaut 16, beispielsweise in Form von Textilgewebe, im geschlossenen Zustand den Fahrzeuginnenraum überspannt und von Querspiegeln 18, 20 und 22 abgestützt wird.

Eine das Verdeck nach hinten abschließende, in sich starre Heckscheibenbaugruppe 24 enthält eine in sich starre, vorzugsweise relativ großflächige und dreidimensionale gekrümmte Heckscheibe 26, deren Unterrand an einem Spannbügel 28 gehalten ist, der das Verdeck in geschlossenem Zustand zu einem Heckdeckel 29 und gegebenenfalls Karosserieseitenteilen abschließt.

Der Spannbügel 28 und die Heckscheibe 26 bilden einen in sich starren Verbund, wobei sich im dargestellten Beispiel der Unterrand der Heckscheibe 26 nicht längs der gesamten Länge des Spannbügels 28 erstreckt, so dass der Spannbügel 28 seitlich in je einem, vom Seitenrand der Heckscheibe 26 bei geschlossenem Faltverdeck etwa in Vorwärtsrichtung des Fahrzeugs vorstehenden Spannarm 30 endet.

Die Heckscheibenbaugruppe 24 ist an der Fahrzeugkarosserie mittels eines Viergelenkmechanismus schwenkbar gelagert, der einen ersten Gelenkhebel 32 und einen zweiten Gelenkhebel 34 enthält. Der erste Gelenkhebel 32 ist an dem Spannarm 30 nahe dem Seitenrand der Heckscheibe 26 angelenkt und an der Karosserie in einem Lager 36 gelagert, das sich in geschlossenem Zustand des Verdecks (Fig. 1.) unterhalb und vor der Lagerung am Spannarm befindet. Der zweite Gelenkhebel 34 ist an einer Konsole 38 gelagert, die vom oberen Bereich des Seitenrandes der Heckscheibe 26.starr in Richtung auf ein hinterstes Seitenrahmenteil 40 vorsteht. Das andere Ende des zweiten Gelenkhebels 34 ist an der Karosserie hinter und vorzugsweise etwas oberhalb des Lagers 36 gelagert.

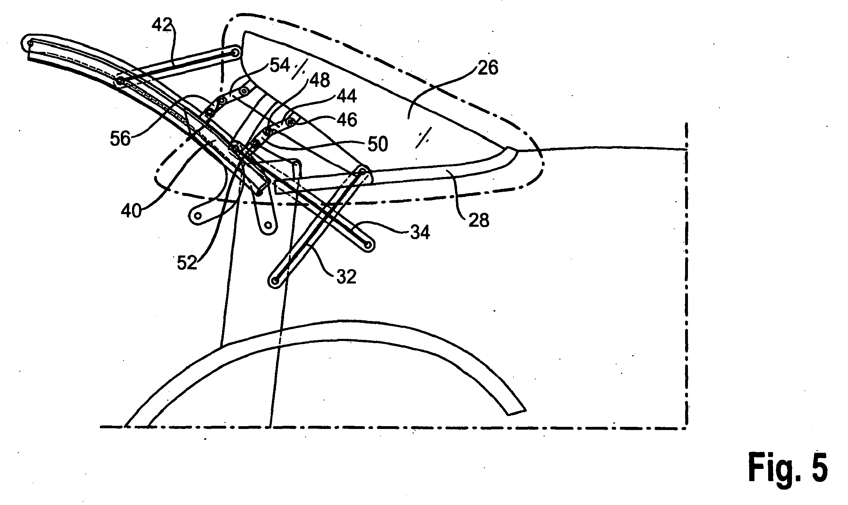

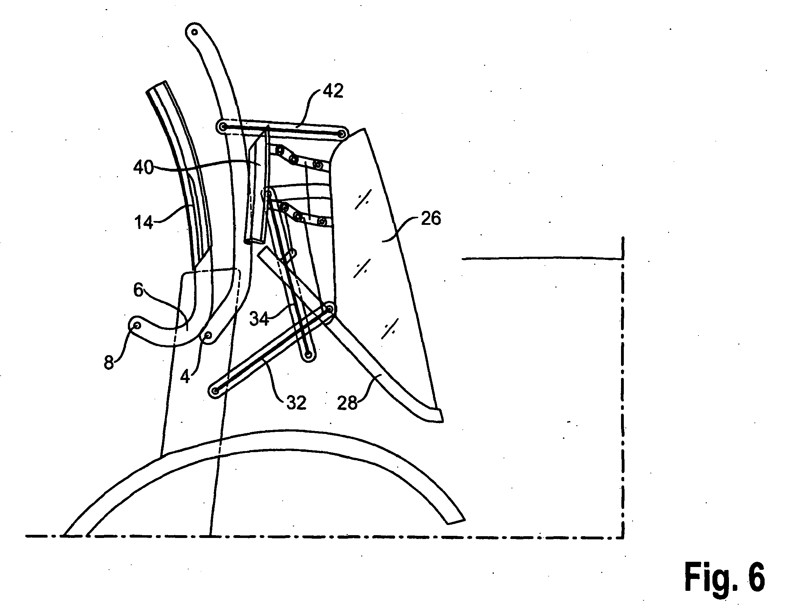

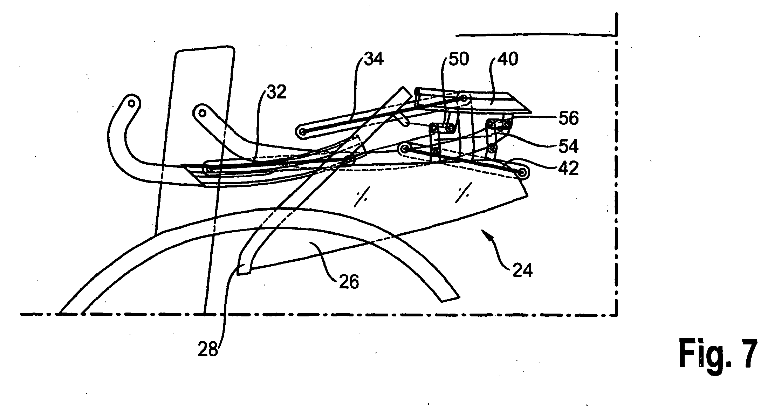

Zur Führung bzw. Betätigung der Verschwenkung der Heckscheibenbaugruppe 24 dient ein Betätigungshebel 42, der an dem ersten Rahmenteil 2 und am Heckscheibenrand in einem seitlichen und oberen Bereich der Heckscheibe 26 angelenkt ist. Die mit dem bisher geschilderten Bauteilen erzielte Öffnungs- und Schließkinematik der Heckscheibenbaugruppe ist insbesondere aus den Fig. 5 bis 7 ersichtlich. Die Heckscheibenbaugruppe bewegt sich beim Öffnen des Verdecks aus ihrer geschlossenen Stellung 6, in der der Unterrand der Heckscheibe bzw. der den Unterrand der Heckenscheibenbaugruppe bildende Spannbügel 28 mit dem Heckdeckel 29 abschließt, in Uhrzeigerrichtung nach hinten und unten, wobei in der voll geöffneten, tief abgesenkten Stellung der Heckscheibenbaugruppe 24, in der die Heckscheibe 26 nach unten zu liegen kommt, der zweite Gelenkhebel 34 hinter und über dem ersten Gelenkhebel 32 angeordnet ist und der Betätigungshebel 42 unterhalb des zweiten Gelenkhebels 34 angeordnet ist. Wie insbesondere aus Fig. 5 ersichtlich, ist der zweite Gelenkhebel 34 in Schließstellung des Verdecks etwa in einer die Linie der Rahmenteile verlängernden Linie angeordnet.

Im folgenden wird ein Gestängemechanismus beschrieben, mit dem sichergestellt wird, dass die vorzugsweise aus Textilgewebe bestehende flexible Dachhaut bei geschlossenem Verdeck auch im Bereich zwischen dem Seitenrand der Heckscheibe 26 und dem von diesem beabstandeten Rand des Daches gespannt ist. Wie beispielsweise aus Fig. 5 ersichtlich, ist das hinterste Seitenrahmenteil 40 am benachbarten Seitenrand der Heckscheibe 26 mittels insgesamt vier Stützhebeln befestigt. Ein erster Stützhebel 44 ist über ein Scharnier 46 mit einem mittleren Bereich des Seitenrandes der Heckscheibe 26 verbunden und über ein Scharnier 48 mit einem zweiten Stützhebel 50 verbunden, der wiederum über ein Scharnier 52 mit dem hintersten Seitenrahmenteil 40 verbunden ist.

Im Abstand und oberhalb der Stützhebel 44 und 50 sind zwei weitere Stützhebel 54 und 56 vorgesehen, die ähnlich den Stützhebeln 44 und 50 an der Heckscheibe 26, dem hintersten Rahmenteil 40 und aneinander gelagert sind.

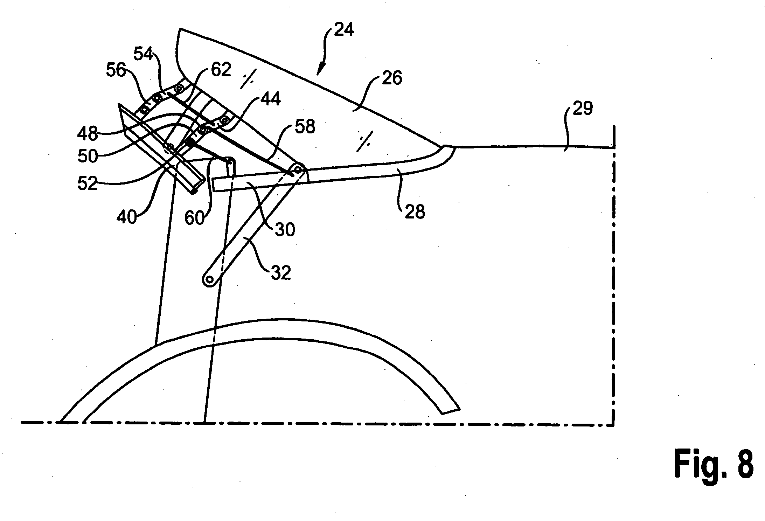

Zur Führung der Bewegung der Stützhebel und des hintersten Seitenrahmenteils 40 sind in den Fig. 1 bis 7 lediglich als dünne Striche eingezeichnete Steuerhebel vorgesehen, die in den Fig. 8 bis 10 dick eingezeichnet sind. Ein erster Steuerhebel 58 ist an dem ersten Gelenkhebel 32 in der Nähe von dessen Lagerung am Spannbügel 28 und an einem der Stützhebel 44, 50, vorzugsweise im Scharnier 48 gelagert. Ein zweiter Steuerhebel 60 ist am vorderen Endbereich des Spannarms 30, vorzugsweise an einer starr mit dem Spannarm 30 verbundenen Konsole, und am hintersten Seitenrahmenteil 40, vorzugsweise an einer starr mit dem Seitenrahmenteil 40 ausgebildeten Konsole, im Scharnier 52 gelagert.

Ein dritter Steuerhebel 62 ist am ersten Stützhebel 44 und am weiteren Stützhebel 54 gelagert.

Die mit den geschilderten Stützhebeln und Steuerhebeln gezielte Kinematik wird anhand der Fig. 5 bis 10 erläutert:

Wie aus Fig. 5 ersichtlich, ist die Bemessung der einzelnen Hebel und deren Lagerung derart, dass im geschlossenen Zustand des Verdecks die Stützhebel 44 und 50 sowie 54 und 56 sich nicht genau in gegenseitiger Verlängerung bzw. Strecklage befinden, in der der Abstand zwischen dem hintersten Seitenrahmenteil 40 und den benachbarten Seitenrand der Heckscheibe 26 maximal ist, sondern gemäß Fig. 5 sich der Stützhebel 44 bzw. 54 jeweils leicht nach rechts gegenüber der Verlängerung des Stützhebels 50 bzw. 56 geneigt befindet.

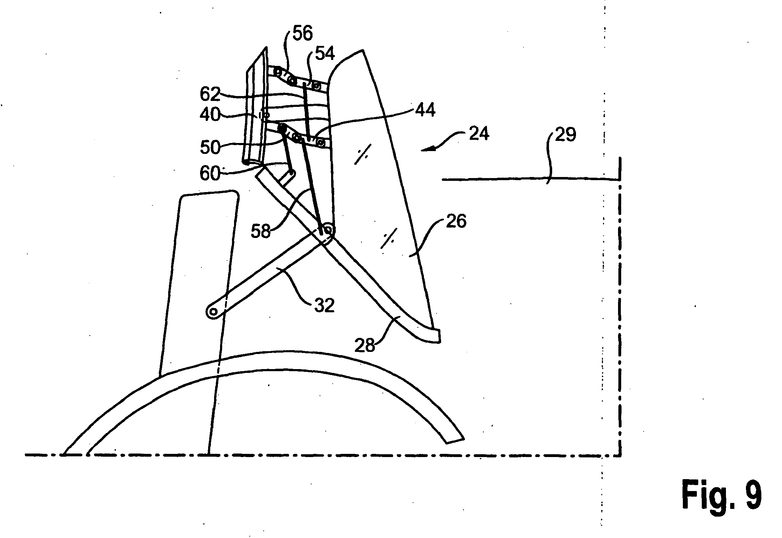

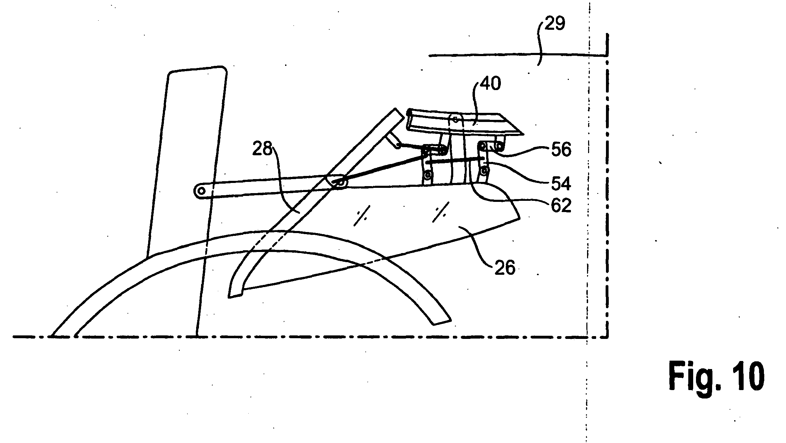

Wenn das Verdeck geöffnet wird und die Heckscheibenbaugruppe 24 dabei gemäß Fig. 8 im Uhrzeigersinn verschwenkt wird, gelangen die Stützhebel 44 und 50 bzw. 54 und 56 in eine Strecklage und aus dieser in die Stellung gemäß Fig. 9, in der die Stützhebel 44 und 54 sich jeweils linksseitig der Verlängerung der Stützhebel 50 bzw. 56 befinden. Beim weiteren Öffnen des Verdecks (Fig. 10) bilden die Stützhebel 44 und 50 sowie 54 und 56 einen zunehmend größeren Winkel miteinander, so dass sich das Seitenrahmenteil 40 zunehmend an den Heckscheibenrand annähert.

Mit der geschilderten Kinematik wird erreicht, dass die flexible Dachhaut, vorzugsweise Textilgewebe, die am Seiten- und Oberrand der Heckscheibe 26, dem Spannarm 30 und dem hintersten Seitenrahmenteil 40 sowie den anschließenden Seitenrahmenteilen 14, 10 und 12 befestigt ist, beim Schließen des Verdecks zwischen dem Seitenrand der Heckscheibe 26 und dem Seitenrahmenteil 40 kurz vor der Schließstellung des Verdecks, wenn sich die Stützhebel in Strecklage befinden, maximal gespannt wird und infolge ihrer Spannung dann zusätzlich dazu beiträgt, dass das Verdeck in Schließstellung gelangt, so dass die Spannung selbsttätig erhalten bleibt, ohne dass auf das Verdeckgestell beispielsweise eine motorische Schließkraft ausgeübt werden muss. Es versteht sich, dass das Verdeckgestell insgesamt vorzugsweise derart ausgebildet ist, dass es kurz vor Erreichen seiner Schließstellung, in der das vorderste Seitenrahmenteil 12 in Anlage an einen nicht dargestellten Windschutzscheibenrahmen kommt, eine Übertotpunktstellung durchfährt.

Mit dem geschilderten Mechanismus wird nicht nur eine einwandfreie Spannung des Verdeckstoffs sichergestellt, sondern auch sichergestellt, dass sich das hinterste Seitenrahmenteil 40, das lediglich an dem Seitenrand der Heckscheibe 26 und über den Steuerhebel 60 am Spannarm 30 befestigt ist, in Schließstellung des Verdecks in eine präzise an das anschließende Seitenrahmenteil 14 anschließende Stellung bewegt.

Das anhand der Figuren beispielhaft geschilderte Verdeck kann in vielfältiger Weise abgeändert werden. Beispielsweise kann die Heckscheibe 26 insgesamt in einem Rahmen gefasst sein, der starr oder einteilig mit dem Spannbügel 28 ausgebildet ist und der die Lager für die Stützhebel trägt und mit der Konsole 38 starr verbunden ist. Innerhalb des Spannbügels 28 ist vorzugsweise eine beispielsweise gelenkig mit dem Spannbügel 28 verbundene Platte vorgesehen, die in Schließstellung des Verdecks eine Hutablage bildet und den Raum zwischen dem unteren Rand der Heckscheibe und beispielsweise einer Rücksitzlehne des Fahrzeugs abschließt. Bei in Offenstellung befindlichen Verdeck kann diese Platte zur Heckscheibe hin bewegt werden, so dass innerhalb der Heckscheibenbaugruppe 24 Platz zur Aufnahme von Gestängeteilen und Teilen der Dachhaut vorhanden ist.

Das Stoffverdeck kann mit Z-Faltung in der geöffneten Stellung des Verdecks abgelegt werden oder konventionell mit Ablage der Dachspitze. Die Dachspitze kann in geöffnetem Zustand des Verdecks eine Hutablage bilden.

Die Heckscheibe 26 kann größer als in den Figuren dargestellten, als eine Panoramascheibe ausgebildet sein, die bis zu den Enden der Spannarme reicht. Insbesondere in diesem Fall genügen zwei Stützhebel zur Sicherstellung der Verdeckspannung. Die Lagerung der Heckscheibenbaugruppe an der Fahrzeugkarosserie muss nicht zwangsläufig über ein Viergelenkscharnier erfolgen. Die Lagerung kann mit einer einzigen Drehachse erfolgen. Der Betätigungshebel 42 ist nicht zwingend, vielmehr kann die Heckscheibenbaugruppe auch unmittelbar mit einem Antrieb gekoppelt sein. Das System kann, wie dargestellt, derart ausgebildet sein, dass der Heckdeckel bei Öffnung des Verdecks geschlossen bleibt oder aber in an sich bekannter Weise nach vorne hin geöffnet wird, so dass in an sich bekannter Weise eine Öffnung zur Absenkung des Verdecks in einen im Heckbereich vorgesehenen Verdeckkasten freigegeben wird.

Die verschiedenen Hebel können in geeigneter Weise anders angelenkt und ausgebildet sein, solange die Grundidee der Erfindung verwirklicht wird, dass der Verdeckstoff zwischen der Heckscheibe und dem benachbarten Seitenrahmenteil mittels eines Übertotpunktmechanismus gespannt wird und/oder die Heckscheibenbaugruppe tief in das Heck des Fahrzeugs versenkt wird. Die Dachhaut muss nicht insgesamt flexibel sein; das Dach kann insbesondere in seinem vorderen Bereich auch durch eine starre Platte gebildet sein.

### Bezugszeichen

| | | | |
|---|---|---|---|
| 2 | Rahmenhebel | 4 | Lager |
| 6 | Rahmenhebel | 8 | Lager |
| 10 | Seitenrahmenteil | 12 | Rahmenhebel |
| 14 | Rahmenteil | 16 | flexible Dachhaut |
| 18 | Querspiegel | 20 | Querspiegel |
| 22 | Querspiegel | 24 | Heckscheibenbaugruppe |
| 26 | Heckscheibe | 28 | Spannbügel |
| 29 | Heckdeckel | 30 | Spannarm |
| 32 | Gelenkhebel | 34 | Gelenkhebel |
| 36 | Lager | 38 | Konsole |
| 40 | Seitenrahmenteil | 42 | Betätigungshebel |
| 44 | Stützhebel | 46 | Scharnier |
| 48 | Scharnier | 50 | Stützhebel |
| 52 | Scharnier | 54 | Stützhebel |
| 56 | Stützhebel | 58 | Steuerhebel |
| 60 | Steuerhebel | 62 | Steuerhebel |

## Patentansprüche

1. Faltverdeck für ein Cabriolet-Fahrzeug, welches Faltverdeck enthält eine in sich starre Heckscheibenbaugruppe (24), die beidseitig an einer Fahrzeugkarosserie schwenkbar lagerbar ist, ein beidseitig des Fahrzeugs im Bereich hinter dessen Fahrgastraum schwenkbar montierbares Verdeckgestell mit Seitenrahmenteilen (10, 12, 14, 40), die im geschlossenen Zustand des Faltverdecks die Dachhaut (16) beidseitig tragen und beim Öffnen des Faltverdecks sich derart bewegen, dass sie zusammen mit der Dachhaut und der abwärts verschwenkten Heckscheibenbaugruppe zumindest teilweise in einen Heckbereich des Fahrzeugs versenkbar ist,
wobei zumindest ein am Oberrand und den Seitenrändern einer Heckscheibe (26) und an hintersten der Seitenrahmenteile (40) befestigter hinterer Bereich der Dachhaut aus flexiblem Material besteht,
**dadurch gekennzeichnet, dass**
jedes der hintersten der Seitenrahmenteile (40) über ein Gestänge (44, 50, 54, 56) derart mit der Heckscheibenbaugruppe (24) verbunden ist, dass ein Abstand zwischen dem Seitenrahmenteil und dem Seitenrand der Heckscheibe kurz vor der voll geschlossenen Stellung des Verdecks ein Maximum durchläuft, so dass die zwischen dem Seitenrand der Heckscheibe und dem benachbarten Seitenrahmenteil wirksame Spannung des flexiblen Materials der Dachhaut einer Öffnung des Verdecks entgegenwirkt.

2. Faltverdeck nach Anspruch 1, **dadurch gekennzeichnet, dass** das hinterste Seitenrahmenteil (40) am Seitenrand der Heckscheibe (26) mittels wenigstens zweier gelenkig miteinander verbundener Stützhebel (44. 50, 54, 56) gehalten ist, von denen ein erster (44) mit dem seitlichen Heckscheibenrand und ein zweiter (50) mit dem Seitenrahmenteil (40) verbunden ist, und dass wenigstens ein gelenkig mit einem der Stützhebel und der Heckscheibenbaugruppe verbundener Steuerhebel (58, 60, 62) vorgesehen ist, der die Stützhebel beim Schließen des Faltverdecks kurz vor der voll geschlossenen Stellung durch eine Strecklage hindurch bewegt.

3. Faltverdeck nach Anspruch 1 oder 2, **dadurch gekennzeichnet, dass** die Heckscheibenbaugruppe beidseitig einen Viergelenkmechanismus (32, 34) zur Befestigung an der Fahrzeugkarosserie aufweist.

4. Faltverdeck nach Anspruch 3, **dadurch gekennzeichnet, dass** jeder Viergelenkmechanismus einen ersten Gelenkhebel (32), der am Unterrand der Heckscheibenbaugruppe (24) angelenkt ist, und einen zweiten Gelenkhebel (34) aufweist, der am Seitenrand der Heckscheibe (26) angelenkt ist, wobei das freie Ende des ersten Gelenkhebels für eine Lagerung an der Fahrzeugkarosserie an einer Stelle vor der Lagerung des zweiten Gelenkhebels an der Fahrzeugkarosserie vorgesehen ist.

5. Faltverdeck nach den Ansprüchen 2 und 4, **dadurch gekennzeichnet, dass** der erste und/oder zweite Stützhebel (44, 50) über einen ersten Steuerhebel (58) mit dem ersten Gelenkhebel (32) und das hinterste Seitenrahmenteil (40) über einen zweiten Steuerhebel (60) mit dem Unterrand der Heckscheibenbaugruppe (24) verbunden ist.

6. Faltverdeck nach Anspruch 2 oder 5, **dadurch gekennzeichnet, dass** der Unterrand der Heckscheibenbaugruppe (24) seitlich in je einem vom Seitenrand der Heckscheibe (26) nach vorne vorstehenden Spannarm (30) endet, dass das hinterste Seitenrahmenteil (40) am seitlichen Heckscheibenrand mittels des ersten und zweiten Stützhebels (44, 50) und zwei weitere, im Abstand vom ersten und zweiten Stützhebel angeordnete Stützhebel (54, 56) angebracht ist und dass zwischen dem ersten und/oder dem zweiten Stützhebel und wenigstens einem der weiteren Stützhebel ein weiterer Steuerhebel (62) angeordnet ist, der die weiteren Stützhebel beim Öffnen des Faltverdecks kurz vor Erreichen der Offenstellung in eine Strecklage bewegt.

7. Faltverdeck nach einem der Ansprüche 1 bis 6, **dadurch gekennzeichnet, dass** zwischen einem an der Fahrzeugkarosserie anlenkbaren Rahmenteil (2) des Verdeckgestells und dem Seitenrand der Heckscheiben (26) ein Betätigungshebel (42) angeordnet ist, der beim Öffnen des Verdecks die Heckscheibenbaugruppe, gesehen von links auf das Faltverdeck, in Uhrzeigerrichtung verschwenkt.

8. Faltverdeck nach einem der Ansprüche 1 bis 7: an der Heckscheibenbaugruppe (24) eine Hutablageplatte vorgesehen ist, die im geschlossenen Zustand des Faltverdecks eine Hutablage bildet.

9. Cabriolet-Fahrzeug, enthaltend ein Faltverdeck nach einem der Ansprüche 1 bis 8.

## Claims

1. A folding top for a cabriolet vehicle, said folding top containing a rear window assembly (24), which is rigid per se and which is able to be pivotably fitted at both sides on a vehicle body, a folding top frame which is pivotably mounted at both sides of the vehicle in the area behind the passenger space thereof and which has side frame parts (10, 12, 14, 40) which, when the folding top is in the closed state, bear the roof skin (16) at both sides and, when opening the folding top, move such that they are able to be lowered, together with the roof skin and the downwardly pivoted rear window assembly, at least partially, into a rear area of the vehicle,
wherein at least a roof skin rear area is made of a flexible material, said area being attached to the upper edge and the side edges of a rear window (26) and to the rearmost of the side frame parts (40),
**characterised in that**
each of the rearmost of the side frame parts (40) is connected, by means of a rod (44, 50, 54, 56), to the rear window assembly (24), such that a spacing between the side frame part and the side edge of the rear window shortly before the fully closed position of the folding top passes a maximum, such that the tension of the flexible material of the roof skin, which is effective between the side edge of the rear window and the adjacent side frame part, acts against an opening of the folding top.

2. The folding top according to Claim 1, **characterised in that** the rearmost side frame part (40) is held at the side edge of the rear window (26) by means of least two support levers (44, 50, 54, 56) which are jointedly connected to one another and of which a first (44) is connected with the side rear window edge and a second (50) is connected with the side frame part (40), and **in that** at least one control lever (58, 60, 62) is provided which is jointedly connected to one of the support levers and the rear window assembly and which moves the support levers through an extension position during closing of the folding top shortly before the fully closed position.

3. The folding top according to claim 1 or 2, **characterised in that** the rear window assembly has, on both sides, a four-bar mechanism (32, 34) to be attached to the vehicle body.

4. The folding top according to claim 3, **characterised in that** each four-bar mechanism has a first articulated lever (32), which is attached onto the lower edge of the rear window assembly (24), and a second articulated lever (34), which is attached onto the side edge of the rear window (26), wherein the free end of the first articulated lever for fitting to the vehicle body is provided at a position in front of the fitting of the second articulated lever to the vehicle body.

5. The folding top according to claims 2 and 4, **characterised in that** the first and/or second support lever (44, 50) is connected, via a first control lever (58), to the first articulated lever (32) and the rearmost side frame part (40) is connected, via a second control lever (60), to the lower edge of the rear window assembly (24).

6. The folding top according to claim 2 or 5, **characterised in that** the lower edge of the rear window assembly (24) ends at the side in each case in a tension arm (30) protruding forwards from the side edge of the rear window (26), **in that** the rearmost side frame part (40) at the side rear window edge is attached by means of the first and second support levers (44, 50) and two further support levers (54, 56) arranged spaced apart from the first and second support levers, and that there is arranged between the first and/or the second support lever and at least one of the further support levers a further support lever (62) which moves the further support lever in an extension position during opening of the folding top shortly before the open state is reached.

7. The folding top according to one of claims 1 to 6, **characterised in that** there is arranged between a car body-attachable frame part (2) of the folding top frame and the side edge of the rear windows (26) an actuation lever (42) which, seen from the left onto the folding roof, pivots clockwise when the folding top is opened.

8. The folding top according to one of claims 1 to 7: there is provided, at the rear window assembly (24), a rear parcel shelf plate, which, in the closed state of the folding top, forms a rear parcel shelf.

9. A cabriolet vehicle containing a folding top according to one of claims 1 to 8.

## Revendications

1. Capote pour un véhicule cabriolet dont la capote contient un ensemble de vitre arrière (24) rigide en soi qui peut être disposé de façon pivotante des deux côtés contre une carrosserie de véhicule, un châssis de capote pouvant être monté de façon pivotante des deux côtés du véhicule dans la zone située à l'arrière de son compartiment de passagers, ledit châssis de capote étant pourvu de parties de cadre latéral (10, 12,14,40) qui supportent des deux côtés le panneau de toit (16) à l'état fermé de la capote et se déplacent à l'ouverture de la capote de telle sorte qu'elles peuvent être plongées conjointement avec le panneau de toit et l'ensemble de vitre arrière pivotant vers le bas au moins en partie dans une zone arrière du véhicule,
au moins une zone arrière du panneau de toit fixée au bord supérieur et aux bords latéraux d'une vitre arrière (26) et à la plus reculée des parties de cadre latéral (40) étant en matériau flexible,
**caractérisée en ce que**
chacune des parties les plus reculées des parties de cadre latéral (40) est reliée à l'ensemble de vitre arrière (24) par l'intermédiaire d'une tringlerie (44, 50, 54, 56) de telle sorte qu'une distance entre la partie de cadre latéral et le bord latéral de la vitre arrière atteint un maximum peu avant la position entièrement fermée de la capote, de sorte que la tension agissant entre le bord latéral de la vitre arrière et la partie de cadre latéral voisine du matériau flexible du panneau de toit s'oppose à une ouverture de la capote.

2. Capote selon la revendication 1, **caractérisée en ce que** la partie de cadre latéral (40) la plus reculée est maintenue au niveau du bord latéral de la vitre arrière (26) à l'aide d'au moins deux leviers d'appui (44, 50, 54, 56) reliés entre eux de façon articulée, parmi lesquels un premier levier d'appui (44) est relié au bord de vitre arrière latéral et un second levier d'appui (50) est relié à la partie de cadre latéral (40), et **en ce qu'**au moins un levier de commande (58, 60, 62) relié de façon articulée à un des leviers d'appui et à l'ensemble de vitre arrière est prévu, ledit levier de commande déplaçant les leviers d'appui lors de la fermeture de la capote à l'aide d'une position d'allongement peu avant la position entièrement fermée.

3. Capote selon la revendication 1 ou 2, **caractérisée en ce que** l'ensemble de vitre arrière présente des deux côtés un mécanisme à quadruple articulation (32, 34) pour la fixation à la carrosserie du véhicule.

4. Capote selon la revendication 3, **caractérisée en ce que** chaque mécanisme à quadruple articulation présente un premier levier articulé (32) qui est articulé au niveau du bord inférieur de l'ensemble de vitre arrière (24) et un second levier articulé (34) qui est articulé au niveau du bord latéral de la vitre arrière (26), l'extrémité libre du premier levier articulé étant prévue pour un logement contre la carrosserie de véhicule à un certain endroit avant le logement du second levier articulé contre la carrosserie de véhicule.

5. Capote selon les revendications 2 et 4, **caractérisée en ce que** le premier et/ou second levier d'appui (44, 50) est relié au premier levier articulé (32) par l'intermédiaire d'un premier levier de commande (58) et **en ce que** la partie de cadre latéral (40) la plus reculée est reliée au bord inférieur de l'ensemble de vitre arrière (24) par l'intermédiaire d'un second levier de commande (60).

6. Capote selon la revendication 2 ou 5, **caractérisée en ce que** le bord inférieur de l'ensemble de vitre arrière (24) se termine respectivement en côté dans un bras de serrage (30) saillant vers l'avant hors du bord latéral de la vitre arrière (26), **en ce que** la partie de cadre latéral (40) la plus reculée est disposée au niveau du bord de vitre arrière latéral au moyen du premier et du second levier d'appui (44, 50) et de deux leviers d'appui (54, 56) supplémentaires disposés à distance des premier et second leviers d'appui et **en ce qu'**un levier de commande (62) supplémentaire est disposé entre le premier et/ou le deuxième levier d'appui et au moins un des leviers d'appui supplémentaires, ledit levier de commande déplaçant les leviers d'appui supplémentaires dans une position d'allongement à l'ouverture de la capote peu avant d'atteindre la position ouverte.

7. Capote selon l'une quelconque des revendications 1 à 6, **caractérisée en ce qu'**un levier d'actionnement (42) est disposé entre une partie de cadre (2) du châssis de capote pouvant être articulée au niveau de la carrosserie du véhicule et le bord latéral des vitres arrière (26), ledit levier d'actionnement pivotant l'ensemble de vitre arrière dans le sens des aiguilles d'une montre à l'ouverture de la capote, vu depuis la gauche sur la capote.

8. Capote selon l'une quelconque des revendications 1 à 7 sur l'ensemble de vitre arrière (24) de laquelle un plateau de plage arrière est prévu, qui forme à l'état fermé de la capote une plage arrière.

9. Véhicule cabriolet, contenant une capote selon l'une quelconque des revendications 1 à 8.
